(19) Europäisches Patentamt European Patent Office Office européen des brevets

(11) **EP 3 813 059 B1**

(12) **EUROPEAN PATENT SPECIFICATION**

(45) Date of publication and mention
of the grant of the patent:
**19.02.2025  Bulletin 2025/08**

(21) Application number: **19218256.6**

(22) Date of filing: **19.12.2019**

(51) International Patent Classification (IPC):
**G10L 15/06** (2013.01)     **G06F 21/62** (2013.01)
**G10L 15/26** (2006.01)

(52) Cooperative Patent Classification (CPC):
**G10L 15/063; G06F 21/6254;** G10L 15/26

(54) **OPTIMAL PII-SAFE TRAINING SET GENERATION FOR SPEECH RECOGNITION MODEL**

OPTIMALE PII-SICHERE TRAININGSSATZERZEUGUNG FÜR SPRACHERKENNUNGSMODELL

GÉNÉRATION OPTIMALE D'ENSEMBLE D'ENTRAÎNEMENT SÉCURISÉ POUR LES INFORMATIONS PERSONNELLEMENT IDENTIFIABLES POUR MODÈLE DE RECONNAISSANCE VOCALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2019   US 201962923906 P**

(43) Date of publication of application:
**28.04.2021   Bulletin 2021/17**

(73) Proprietor: **Genesys Cloud Services, Inc.
Menlo Park, CA 94025 (US)**

(72) Inventors:
• **FAIZAKOF, Avraham**
**6971029 Tel-Aviv (IL)**
• **HAIKIN, Lev**
**6971029 Tel-Aviv (IL)**
• **MAZZA, Arnon**
**6971029 Tel-Aviv (IL)**
• **KONIG, Yochai**
**Daly City, CA California 94014 (US)**
• **MOSEK, Shahar**
**6971029 Tel-Aviv (IL)**

(74) Representative: **FRKelly
Waterways House
Grand Canal Quay
Dublin D02 PD39 (IE)**

(56) References cited:
**US-A1- 2014 278 425     US-B1- 10 002 639
US-B1- 10 388 272**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The invention relates generally to the field of data collection. More specifically the invention relates to a system and method for optimally improving data for machine learning training model.

### BACKGROUND

In the modern world, as technology progresses, Artificial Intelligence (AI) systems take a greater role in all fields of industry. AI systems are "data-hungry" and are based on machine learning technology with a training stage. The training model requires a large amount of data as an input, in order to provide good results. The more diverse the data is the better are the results of the machine learning system. The necessity to provide a large amount of data to the AI training model is a challenge that is faced constantly.

The foregoing examples of the related art and limitations related therewith are intended to be illustrative and not exclusive. Other limitations of the related art will become apparent to those of skill in the art upon a reading of the specification and a study of the figures.

"Thomson et al. (US Patent Pub. No. US 10388272B1, hereinafter "Thomson") teaches a method of training speech recognition systems using word sequences (Thomson, Title).

Thomson teaches obtaining a first audio data of a communication session between a first device and a second device, obtaining a text string that is a transcription of the first audio data, and selecting a contiguous sequence of words from the text string as a first word sequence.

Thomson then teaches comparing the first word sequence to multiple word sequences obtained before the communication session and in response to the first word sequence corresponding to one of the multiple word sequences, incrementing a counter of multiple counters associated with the one of the multiple word sequences. Subsequently, Thomson teaches deleting the text string and the first word sequence and training and after deleting the text string and the first word sequence, training a language model of an automatic transcription system using the multiple word sequences and the multiple counters (Thomson, Abstract). Jost et al., (US Application No. US 2014/278425A1, hereinafter "Jose") teaches Data shredding for speech recognition language model training under data retention restrictions (Jose, Title).

As explained by Jose (e.g., Jose, Abstract), training speech recognizers, e.g., their language or acoustic models, using actual user data is useful, but retaining personally identifiable information may be restricted in certain environments due to regulations. Accordingly, Jose teaches a method or system for enabling training of a language model which includes producing segments of text in a text corpus and counts corresponding to the segments of text, the text corpus being in a depersonalized state. The method described by Jose includes enabling a system to train a language model using the segments of text in the depersonalized state and the counts."

### SUMMARY

The following embodiments and aspects thereof are described and illustrated in conjunction with systems, tools and methods which are meant to be exemplary and illustrative, not limiting in scope.

There is provided, in an embodiment, a method according to claim 1.

There is also provided, in an embodiment, a computer program, comprising instructions which, when the program is executed by a processor, cause the processor to carry out the method of the present disclosure.

There is further provided, in an embodiment, a system according to claim 10.

In some embodiments, the re-training optimizes an accuracy parameter associated with said textual output of said trained speech recognition algorithm.

In some embodiments, the re-trained trained speech recognition algorithm is applied to one or more target audio files, to obtain textual output corresponding to each of said target audio files. In some embodiments, the re-training is performed at least in response to deviations in an expected distribution of features in said target audio files.

In some embodiments, the selecting based on said content comprises rejecting said portions whose corresponding textual output comprises at least one of: a numerical string; textual output which matches an entry in a known database; and textual output which matches, at least in part, the textual output corresponding to another portion in said subset.

In some embodiments, the duration is between 4 and 6 seconds.

In some embodiments, the confidence score is between 0.7 and 0.9.

In addition to the exemplary aspects and embodiments described above, further aspects and embodiments will become apparent by reference to the figures and by study of the following detailed description. Combinations or sub-combinations of features disclosed herein may also be considered.

## BRIEF DESCRIPTION OF THE FIGURES

Exemplary embodiments are illustrated in referenced figures. Dimensions of components and features shown in the figures are generally chosen for convenience and clarity of presentation and are not necessarily shown to scale. The figures are listed below.

Fig. 1 schematically shows a block diagram of the system of the invention according to an embodiment of the invention; and

Fig. 2 schematically shows the method of the invention according to an embodiment of the invention;

## DETAILED DESCRIPTION

Disclosed herein are a method and system for optimized continuous re-training of a speech recognition machine learning model.

In some embodiments, the machine learning model is trained to perform the technical purpose of speech recognition, e.g., mapping a speech input to a text output. In some embodiments, the steps of generating the re-training set and training the machine learning model contribute to optimizing the technical purpose of the machine learning model.

In some embodiments, the machine learning model is initially trained, at least in part, on a training set comprising audio files comprising speech, wherein the audio files are labelled with a 'ground truth' transcription (which may be obtained through manual transcription of the audio files).

In some embodiments, the machine learning model is deployed into production to perform the technical purpose of transcribing speech recordings into textual output.

However, the distributions of the features and characteristics of the production environment inputs may change over time in ways which may violate the model's assumptions, and, consequently, the predictive performance of the model may degrade over time, due to these changes, in a phenomenon known as 'drift.'

Accordingly, model deployment should be treated as a continuous process. Rather than deploying a model once and moving on to another project, machine learning models are desirably retrained, continuously or periodically, to account for deviations in input data distributions.

Therefore, in some embodiments, the machine learning model of the present disclosure is retrained based on an optimized training set selected from prior results obtained from the machine learning model, wherein the prior results are selected, processed and labelled to achieve optimized re-training results.

In some embodiments, the source of training data may be audio files obtained from call centers and or customer service centers, which conduct a large number of customer calls.

Because these audio files may include private information pertaining to individuals whose privacy must be protected under applicable laws and regulation, in some embodiments, the training set generating process further provides for removal of private information from the data set used as an input for the training model.

Privacy regulations, such as the EU General Data Protection Regulation (GPDR), impose large penalties on companies for privacy breaches. In addition, companies may face reputational damage from mishandling customers' private data. As such, the present invention may be especially useful for service providers such as online retailers, financial institutions, healthcare providers, and any other enterprise digitally hosting large amounts of customers' personal information, which must be protected from intentional misuse and/or misappropriation, as well as unintentional leaks. Unintended privacy breaches can result, e.g., when data containing private information is sent to the wrong recipients, used for purposes for which they are not authorized, stored in inappropriate storage mediums or locations, or when servers are left publicly accessible. Intentional misappropriation may result when an unauthorized third party gains access into the service provider's servers and uses, e.g., individuals' addresses, financial transactions, or medical records, for financial fraud, identity theft, harassment, and the like.

As used herein, the term "private information" (PI) refers broadly to all types of information relating to an individual's private, professional, or public life. PI can encompass any data point regarding the individual - such as a name, a home address, a photograph, email or phone contact details, bank details, posts on social networking websites, medical information, or a computer's IP address, to name a few. One sub-category of PI includes 'personally identifiable information' (PII), which is generally information that can be used on its own or with other information to identify, contact, and/or locate an individual. 'Sensitive personal information' (SPI) is defined as information that if lost, compromised, or disclosed could result in substantial harm, embarrassment, inconvenience, or unfairness to an individual.

Using the private information removal method of the invention allows to constantly increase the amount of training material available for training the machine learning algorithm and thus improve the performance of the system.

In an embodiment of the invention, the usage of the method and system of the present invention can be related to a speech recognition system. There is a constant need to obtain and add new training material to improve the speech recognition results and to make the speech recognition more robust to noise and new voices/people/accents. One potential source of training data may be call centers and or customer service centers, which conduct a large number of customer calls. Accordingly, a standard way to obtain new training material is to transcribe completed calls received from the call center and use it as a data set. However, this may be problematic when PI and/or PII may be present in the data set. Most call center and/or similar enterprises cannot release complete customer communications due to the danger that sensitive information is included, such as credit card numbers, addresses, etc. Accordingly, the method of the present invention permits obtain data from the sites of the call centers, which is both PII safe, and also optimal in the improvement it gives the speech recognition system.

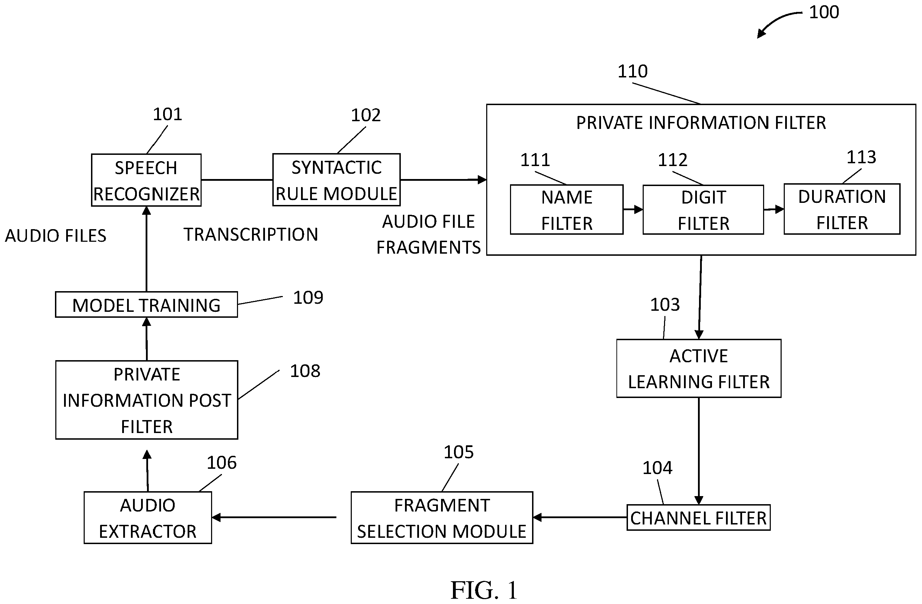

Fig. 1 schematically shows a block diagram of an exemplary system **100** according to an embodiment of the invention. System **100** receives as an input audio files. The audio files comprise speech audio. In an embodiment of the invention, calls from a call center may be the audio files. The audio files are received by speech recognizer **101,** which automatically transcribes the audio files to text, e.g., by applying one or more voice recognition and/or similar techniques, and provides a recognized content of each audio file. The audio files and the automatic transcriptions are the raw material which is used by system **100.** In some embodiments, the transcription and recognized content of each audio file are provided as an input to a syntactic rule module **102.** The syntactic rule module finds syntactic patterns in the transcriptions provided and extracts fragments from each transcription which, e.g., meet one or more desired syntactic patterns. The fragments are outputted and provided as an input to an information filter **110.** This removes all the fragments which contain personally-identifiable and/or any other type of private information (such as: credit card numbers, ID numbers, etc.) and/or information that will reduce accuracy of the machine learning. In an embodiment of the invention, the information filter **110** comprises three filters. A name filter **111,** a numerical filter **112** and a duration filter **113.** The name filter **111** recognizes names by strings comparison, and removes the fragments with recognized names so that said fragments are deleted and are not used in the rest of the process. The numerical filter **112** recognizes numerals and numbers through strings comparison in the fragments and removes the fragments with the recognized numerals and numbers. This way, a fragment for instance with PI like credit card number, social security numbers (SSN), Personal Name, zip code, etc. are not selected for transcription and for further use.

The duration filter **113,** receives the fragments, which no longer contain names, numerals and numbers, and optionally employs a maximum duration in order to limit the amount of continuous audio in a fragment. An example of maximum duration might be 6 seconds. Even if due to speech recognition errors, a fragment is selected with private information, it is limited in the sense that only a portion of the private information might be present. For example, the name but not the credit card number, or the credit card number but not the three numerals on the back of the card. The duration filter also employs a minimum duration to ensure that even though short fragments are used, there is still some context for language modeling.

By filtering such information from data which may violate the model's assumptions, the predictive performance of the model may be stabilized over time, to avoid 'drift.'

In some embodiments, selecting fragments with durations of 4-6 seconds minimizes the private information risk while ensuring data is useful for improving the speech recognition system. Eventually, only one fragment from every audio file is used for the training of the machine learning system, as can be seen in Fig. 1.

In some embodiments, an active learning filter **103** receives the fragments outputted by the duration filter **113.**

In some embodiments, a confidence score from 0 to 1 is given to each fragment. A score of 1 means the content of the fragment is recognized with a 100% degree of confidence and a score of 0 means the content is recognized with no degree of confidence. In some embodiments, the active learning filter **103** only selects fragments with a confidence score between 0.7 and 0.9. Substantial research was done showing that in order to obtain the best improvement on a given budget (e.g., amount of training hours), one needs to select utterances within a certain confidence range such as 0.7-0.9 for manual transcription. The lower bound serves as threshold below which utterances are too noisy. The upper bound refers to a threshold above which the increase of information for the recognizer will be low.

In some embodiments, each fragment is labeled according to its recognized content. In some embodiments, active learning filter **103** compares the recognized content of each fragment with the rest of the fragments according to their labels, and the number of fragments that have the same recognized content is limited to a designated number. This stage helps to keep diversity of the language on the one hand, and avoid too many repetitions of the same sentence on the other hand. For example, in a typical call center, there could be hundreds of phrases such as "I have connection issues" or "I have issues with my set top box". In order to avoid repetitions yet keep diversify of the language and the vocabulary, the maximum number of identical content is limited to a designated threshold.

In some embodiments, a channel filter **104** is used to select audio from different and diverse channels. For example, in the case of audio received from a call center, audio from the customer channel is preferred over the agent channel, to ensure diversity of speakers. While a company has a multitude of agents, it usually has several orders of magnitude more customers. The customer channel ensures greater diversity of voices and environments. For example, while agents are most always in an office environment and using relatively high-end headsets, customers call from different environments like cars, speakers, indoor locations or outdoor locations.

A fragment selection module **105,** eventually selects one fragment from each audio file for manual transcription. The selected fragment is simply the longest fragment, which is shorter than the maximum duration, e.g. 6 seconds.

Once a fragment from each audio file is selected, a new audio file is created by the audio extractor **106.** The new file is actually a part of the original audio file received as input by the speech recognizer **101.** The new file contains the few relevant seconds from the entire call and it is stored in a local folder. For example, if the selected fragment was from time 4:37 to 4:42 on the original audio file, a new audio file is created with a duration of 5 seconds, which contains only the fragment with the relevant content.

At this point, there are provided a set of short audio files, with the recognized content of each short audio file (the recognized content is the machine transcription text). This information (audio + text) is kept for future use.

The fragments are manually transcribed, to allow potential for improvement.

In some embodiments, a manual transcription module **107** receives the selected fragments for manual transcription, e.g., by a human specialist. This is required in order to add training material for machine learning in general and speech recognition in particular.

After manual transcription, names and numerals are again checked for in the fragments by a private information post filter **108.** Any file containing any PI and/or PII is deleted. Statistically, a large majority of the fragments do not contain names or numerals, and those are kept. The remaining fragments are used to train the training model **109** of the machine learning system. This way the amount of material available for the model training is increased, thus the results of the machine learning system are improved. For example in accordance with the speech recognition system, it allows to improve the language and acoustic models.

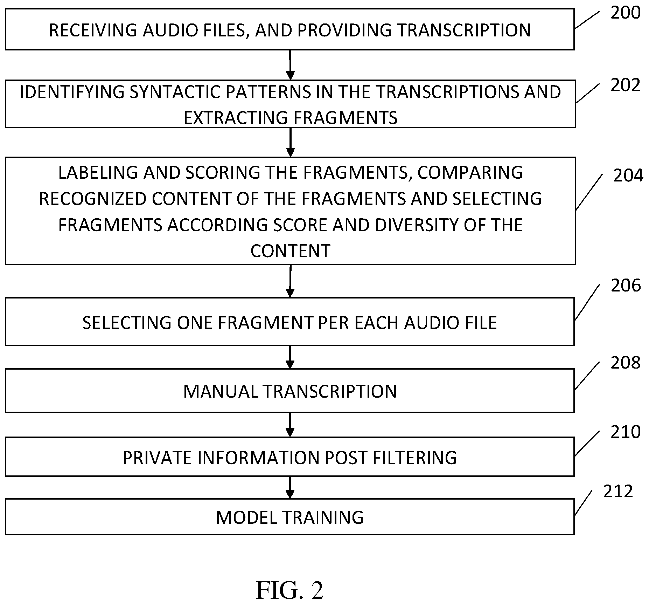

Fig. 2 schematically shows a flow chart, which describes the functional steps in a method of the invention, according to an embodiment of the invention.

In some embodiments, the present disclosure provides for generating an optimal re-training set for a machine learning model that is trained to perform the technical purpose of speech recognition (e.g., mapping a speech input to a text output), based on the following functional steps:

- Receiving a plurality of audio files representing call center conversations;

- Automatically transcribing the audio files using a trained speech recognition algorithm;

- Extracting from the transcribed audio files fragments that are consistent with a specified syntactic pattern;

- Processing the extracted fragments to select a subset of fragments that will form the basis for an optimized training set for re-training of the trained speech recognition algorithm, by:

   o Filtering out fragments with repetitive content (i.e., identical and/or similar content),

   o Filtering out fragments with a transcription confidence score outside a predetermined range of 0.7-0.9, based on a confidence score assigned to the trained speech recognition algorithm, and

   o Selecting fragments representing a diversity of speech sources;

- Selecting from the subset, the longest fragment under a specified duration from each audio file;

- Manually transcribing each selected fragment; and

- Re-training the machine learning model using the selected fragments, wherein the manual transcriptions are used for labelling the fragments.

Accordingly, with continued reference to Fig. 2, at step **200** audio files are received as input and automatically transcribed using a trained speech recognition algorithm. In an embodiment of the invention, the audio files are complete calls received from a call center.

At step **202,** syntactic patterns are identified in the transcription, e.g., subject-verb-object, and fragments are extracted according to syntactic rules. The syntactic rules are used as a segmentation mechanism to decide the start and end of the extracted fragments. The identified patterns make the step of manual transcription easier since grammatically - nice text is easier to understand, and human effort in the transcription is therefore reduced.

For example, there can be a rule that extracts the sequence:

$$PRP - V - (TO) - V - DT - N\{1+\}$$

In order to capture word sequences that fulfill that rule, first a Part of Speech (PoS) tagger (see, e.g., FreeLing, a C++ library providing language analysis functionalities including POS tagging, http://nlp.lsi.upc.edu/freeling/index. php/node/!) is used, which will assign a part of speech to each word, for example:

| Input | I am calling because I want to make a payment arrangement on my balance |
|---|---|
| PoS Output | I/PRP am/VBP calling/VBG because/IN I/PRP want/VBP to/TO make/VB a/DT payment/NN arrangement/NN on/IN my/PRP$ balance/NN |

Then, a sequence of PoS tags that matches the desired sequence is found. As can be seen in the next example:

| Input | I am calling because I want to make a payment arrangement on my balance |
|---|---|
| PoS Output | I/PRP am/VBP calling/VBG because/IN **I/PRP want/VBP to/TO make/VB a/DT payment/NN arrangement/NN** on/IN my/PRP$ balance/NN |
| Rule Output | I want to make a payment arrangement |

In an embodiment of the invention, names, numerals, and/or numbers are recognized through strings comparison against a known list, and fragments which contain names, numerals, and/or numbers are removed. This way, fragments with private information, such as credit card number, social security numbers (SSN), personal names, national identification numbers, zip codes, etc., are removed and are not selected for manual transcription. In addition, a duration filtering is employed by determining a minimum duration and a maximum duration for each audio file fragment. The duration filtering limits the amount of continuous audio in a fragment. An example of minimum and maximum duration might be 4 to 6 seconds. Even if due to speech recognition errors, a fragment is selected with PI and/or drift-inducing data, potential exposure may be further limited because only a portion of it might be present. For example, the name but not the credit card number, or the credit card number but not the three verification numerals on the back of the credit card. The minimum duration filter is employed to ensure that even though short fragments are used, there is still some context for language modeling. In an embodiment of the invention, a selection of fragments with durations of 4 to 6 seconds, minimizes the PI and/or drift risk, yet ensures data is useful for the improvement of the speech recognition system.

At step **204**, the fragments are further processed at the active learning filter **103**, in order to provide an improved data set for the machine learning training model. This step comprises labeling the fragments according to the recognized content of each fragment, and grading each fragment with a confidence score between 0 and 1. Then, the labeled fragments are compared in order to select the best fragments for manual transcription, and for the machine learning training model. The fragments are selected according to the following criteria:

- Repetition of the same recognized content vs diversity in language and vocabulary. A designated threshold is predetermined to limit the number of fragments with identical recognized content on the one hand and to keep diversity of the language on the other hand;

- A confidence score range is predetermined and the fragments with the score in the predetermined range are selected; Substantial research was done showing that in order to obtain the best improvement on a given budget (e.g., amount of training hours), one needs to select utterances within a certain confidence range, such as 0.7-0.9 for manual transcription. The lower bound serves as threshold below which utterances are too noisy. The upper bound refers to a threshold above which the increase of information for the recognizer will be low, since the speech recognizer **101** already works well enough.

- Channel filtering - in order to ensure diversity of speakers, fragments of audio files that were received from diverse and different channels are selected. For example, in a call center, the customer channel are selected, as opposed to the agent channel.

At step **206**, one fragment is selected from each audio file. The selected fragment is simply the longest fragment which is shorter than the maximum duration, e.g. 6 seconds, in the above example. Once a fragment from each audio file is selected, a new audio file is created. The new audio file is actually a part of the original audio file received as an input. The new file contains the few relevant seconds from the entire audio file and it is stored in a local folder.

At step **208,** the fragment selected from each audio file is manually transcribed and then, in step **210** of post filtering, names and numerals are again checked for. Any fragment which contains any PI is deleted.

Finally, at step **212,** the remaining fragments that were not deleted in the pot filtering step are used to retrain the training model **109** of the machine learning system. Retraining with improved data brings to better results of the machine learning system.

In some embodiments, step **204** further includes a private information removal step, wherein any PI is found and filtered out of the transcripts. In an embodiment of the invention, private information is defined as a name or a number, however in another embodiment, private information may be defined as data containing a specific keyword or any other data considered as private data.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire. Rather, the computer readable storage medium is a non-transient (i.e., not-volatile) medium.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Java, Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The description of a numerical range should be considered to have specifically disclosed all the possible subranges as well as individual numerical values within that range. For example, description of a range from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

The descriptions of the various embodiments of the present invention have been presented for purposes of illustration, but are not intended to be exhaustive or limited to the embodiments disclosed. The terminology used herein was chosen to best explain the principles of the embodiments, the practical application or technical improvement over technologies found in the marketplace, or to enable others of ordinary skill in the art to understand the embodiments disclosed herein.

Experiments conducted and described above demonstrate the usability and efficacy of embodiments of the invention.

## Claims

1. A method comprising:

   receiving (200), as input, one or more audio files;
   applying a trained speech recognition algorithm (101) to said one or more audio files, to obtain textual output corresponding to each of said one or more audio files;
   using (202) a Part of Speech, PoS, tagger to assign PoS tags to each word of the textual output;
   extracting, from each of said one or more audio files, one or more portions having a syntactic pattern matching a desired sequence of PoS tags defined by syntactic rules;
   selecting (204) a subset of said portions based on at least one of:

      (i) a content of said textual output associated with each of said portions,
      (ii) a duration of each of said portions, and
      (iii) a confidence score assigned by said trained speech recognition algorithm to said obtained textual output associated with said portion;

   wherein said selecting (204) comprises excluding, from the subset, portions whose corresponding textual output comprises private information;
   receiving, as input, manual transcriptions (208) of said selected portions;
   generating a re-training set comprising:

      (i) said portions in said subset, and
      (ii) said transcriptions corresponding to said portions in said subset; and re-training (212) said trained speech recognition algorithm on said re-training set.

2. The method of claim 1, wherein extracting one or more portions having said syntactic pattern comprises:

   identifying a sequence of PoS tags that matches a desired sequence of words according to a syntactic rule;

using a syntactic rule to identify a start and end of the portion; and
extracting the portion according to the syntactic rule.

3. The method of claim 1, wherein said re-training optimizes an accuracy parameter associated with said textual output of said trained speech recognition algorithm.

4. The method of claim 1, wherein said re-trained trained speech recognition algorithm is applied to one or more target audio files, to obtain textual output corresponding to each of said target audio files.

5. The method of claim 4, wherein said re-training is performed at least in response to deviations in an expected distribution of features in said target audio files.

6. The method of claim 1, wherein said selecting based on said content comprises rejecting said portions whose corresponding textual output comprises at least one of: a numerical string; textual output which matches an entry in a known database; and textual output which matches, at least in part, the textual output corresponding to another portion in said subset.

7. The method of claim 1, wherein said duration is between 4 and 6 seconds.

8. The method of claim 1, wherein said confidence score is between 0.7 and 0.9.

9. A computer program, comprising instructions which, when the program is executed by a processor, cause the processor to carry out the method of any preceding claim.

10. A system (100) comprising:

at least one hardware processor; and
a non-transitory computer-readable storage medium having stored thereon program instructions, the program instructions executable by the at least one hardware processor to:

receive, as input, one or more audio files;
apply a trained speech recognition algorithm (101) to said one or more audio files, to obtain textual output corresponding to each of said one or more audio files;
use a Part of Speech, PoS, tagger to assign PoS tags to each word of the textual output;
extract, from each of said one or more audio files, one or more portions having a syntactic pattern matching a desired sequence of PoS tags defined by syntactic rules;
select a subset of said portions based on at least one of:

(i) a content of said textual output associated with each of said portions,
(ii) a duration of each of said portions, and
(iii) a confidence score assigned by said trained speech recognition algorithm to said obtained textual output associated with said portion;

while excluding, from the subset, portions whose corresponding textual output comprises private information;
receive, as input, manual transcriptions of each of said portions;
generate a re-training set comprising:

(i) said portions in said subset, and
(ii) said transcriptions corresponding to said portions in said subset; and

re-train said trained speech recognition algorithm on said re-training set.

11. The system of claim 10, wherein said re-training optimizes an accuracy parameter associated with said textual output of said trained speech recognition algorithm.

12. The system of claim 10, wherein said re-trained trained speech recognition algorithm is applied to one or more target audio files, to obtain textual output corresponding to each of said target audio files.

13. The system of claim 12, wherein said re-training is performed at least in response to deviations in an expected distribution of features in said target audio files.

14. The system of claim 10, wherein said selecting based on said content comprises rejecting said portions whose corresponding textual output comprises at least one of: a numerical string (112); textual output which matches an entry in a known database; and textual output which matches, at least in part, the textual output corresponding to another portion in said subset.

**Patentansprüche**

1. Verfahren, umfassend:

   Empfangen (200) einer oder mehrerer Audiodateien als Eingabe;
   Anwenden eines trainierten Spracherkennungsalgorithmus (101) auf die eine oder die mehreren Audiodateien, um eine Textausgabe zu erlangen, die jeder der einen oder der mehreren Audiodateien entspricht;
   Verwenden (202) eines Wortart-Markierers (Part of Speech, PoS), um jedem Wort der Textausgabe PoS-Markierungen zuzuweisen;
   Extrahieren eines oder mehrerer Abschnitte, die ein syntaktisches Muster aufweisen, das mit einer gewünschten Sequenz von PoS-Markierungen übereinstimmt, die durch syntaktische Regeln definiert ist, aus jeder der einen oder der mehreren Audiodateien;
   Auswählen (204) einer Teilmenge der Abschnitte basierend auf mindestens einem von Folgendem:

      (i) einem Inhalt der Textausgabe, der jedem der Abschnitte zugeordnet ist,
      (ii) einer Dauer jedes der Abschnitte und
      (iii) einem Vertrauenswert, der durch den trainierten Spracherkennungsalgorithmus der erlangten Textausgabe, die dem Abschnitt zugeordnet ist, zugewiesen wird;

   wobei das Auswählen (204) Ausschließen von Abschnitten, deren entsprechende Textausgabe private Informationen umfasst, aus der Teilmenge umfasst;
   Empfangen von manuellen Transkriptionen (208) der ausgewählten Abschnitte als Eingabe;
   Erzeugen eines Satzes zum erneuten Trainieren, umfassend:

      (i) die Abschnitte in der Teilmenge und
      (ii) die Transkriptionen, die den Abschnitten in der Teilmenge entsprechen; und

   erneutes Trainieren (212) des trainierten Spracherkennungsalgorithmus auf dem Satz zum erneuten Trainieren.

2. Verfahren nach Anspruch 1, wobei das Extrahieren eines oder mehrerer Abschnitte, die das syntaktische Muster aufweisen, Folgendes umfasst:

   Identifizieren einer Sequenz von PoS-Markierungen, die mit einer gewünschten Sequenz von Wörtern gemäß einer syntaktischen Regel übereinstimmt;
   Verwenden einer syntaktischen Regel, um einen Anfang und ein Ende des Abschnitts zu identifizieren; und
   Extrahieren des Abschnitts gemäß der syntaktischen Regel.

3. Verfahren nach Anspruch 1, wobei das erneute Trainieren einen Genauigkeitsparameter optimiert, der der Textausgabe des trainierten Spracherkennungsalgorithmus zugeordnet ist.

4. Verfahren nach Anspruch 1, wobei der erneut trainierte Spracherkennungsalgorithmus auf eine oder mehrere Zielaudiodateien angewandt wird, um eine Textausgabe zu erlangen, die jeder der Zielaudiodateien entspricht.

5. Verfahren nach Anspruch 4, wobei das erneute Trainieren mindestens als Reaktion auf Abweichungen in einer erwarteten Verteilung von Merkmalen in den Zielaudiodateien durchgeführt wird.

6. Verfahren nach Anspruch 1, wobei das Auswählen basierend auf dem Inhalt Zurückweisen der Abschnitte umfasst, deren entsprechende Textausgabe mindestens eines von Folgendem umfasst: eine numerische Zeichenfolge; eine Textausgabe, die mit einem Eintrag in einer bekannten Datenbank übereinstimmt; und eine Textausgabe, die zumindest teilweise mit der Textausgabe übereinstimmt, die einem anderen Abschnitt in der Teilmenge entspricht.

7. Verfahren nach Anspruch 1, wobei die Dauer zwischen 4 und 6 Sekunden beträgt.

8. Verfahren nach Anspruch 1, wobei der Vertrauenswert zwischen 0,7 und 0,9 liegt.

9. Computerprogramm, das Anweisungen umfasst, die, wenn das Programm von einem Prozessor ausgeführt wird, den Prozessor veranlassen, das Verfahren nach einem vorhergehenden Anspruch durchzuführen.

10. System (100), umfassend:

mindestens einen Hardwareprozessor; und
ein nichttransitorisches computerlesbares Medium, das darauf gespeicherte Programmanweisungen aufweist, wobei die Programmanweisungen durch den mindestens einen Hardwareprozessor zu Folgendem ausgeführt werden können:

Empfangen einer oder mehrerer Audiodateien als Eingabe;
Anwenden eines trainierten Spracherkennungsalgorithmus (101) auf die eine oder die mehreren Audiodateien, um eine Textausgabe zu erlangen, die jeder der einen oder der mehreren Audiodateien entspricht;
Verwenden eines Wortart-Markierers, PoS, um jedem Wort der Textausgabe PoS-Markierungen zuzuweisen;
Extrahieren eines oder mehrerer Abschnitte, die ein syntaktisches Muster aufweisen, das mit einer gewünschten Sequenz von PoS-Markierungen übereinstimmt, die durch syntaktische Regeln definiert ist, aus jeder der einen oder der mehreren Audiodateien;
Auswählen einer Teilmenge der Abschnitte basierend auf mindestens einem von Folgendem:

(i) einem Inhalt der Textausgabe, der jedem der Abschnitte zugeordnet ist,
(ii) einer Dauer jedes der Abschnitte und
(iii) einem Vertrauenswert, der durch den trainierten Spracherkennungsalgorithmus der erlangten Textausgabe, die dem Abschnitt zugeordnet ist, zugewiesen wird;

während Abschnitte, deren entsprechende Textausgabe private Informationen umfasst, aus der Teilmenge ausgeschlossen werden;
Empfangen von manuellen Transkriptionen jedes dieser Abschnitte als Eingabe;
Erzeugen eines Satzes zum erneuten Trainieren, umfassend:

(i) die Abschnitte in der Teilmenge und
(ii) die Transkriptionen, die den Abschnitten in der Teilmenge entsprechen; und

erneutes Trainieren des trainierten Spracherkennungsalgorithmus auf dem Satz zum erneuten Trainieren.

11. System nach Anspruch 10, wobei das erneute Trainieren einen Genauigkeitsparameter optimiert, der der Textausgabe des trainierten Spracherkennungsalgorithmus zugeordnet ist.

12. System nach Anspruch 10, wobei der erneut trainierte Spracherkennungsalgorithmus auf eine oder mehrere Zielaudiodateien angewandt wird, um eine Textausgabe zu erlangen, die jeder der Zielaudiodateien entspricht.

13. System nach Anspruch 12, wobei das erneute Trainieren mindestens als Reaktion auf Abweichungen in einer erwarteten Verteilung von Merkmalen in den Zielaudiodateien durchgeführt wird.

14. System nach Anspruch 10, wobei das Auswählen basierend auf dem Inhalt Zurückweisen der Abschnitte umfasst, deren entsprechende Textausgabe mindestens eines von Folgendem umfasst: eine numerische Zeichenfolge (112); eine Textausgabe, die mit einem Eintrag in einer bekannten Datenbank übereinstimmt; und eine Textausgabe, die zumindest teilweise mit der Textausgabe übereinstimmt, die einem anderen Abschnitt in der Teilmenge entspricht.

**Revendications**

1. Procédé comprenant :

   la réception (200), en entrée, d'un ou de plusieurs fichiers audio ;
   l'application d'un algorithme de reconnaissance vocale entraîné (101) auxdits un ou plusieurs fichiers audio, pour obtenir une sortie textuelle correspondant à chacun desdits un ou plusieurs fichiers audio ;
   l'utilisation (202) d'un étiqueteur de partie de discours, PoS, pour attribuer des étiquettes PoS à chaque mot de la sortie textuelle ;
   l'extraction, à partir de chacun desdits un ou plusieurs fichiers audio, d'une ou de plusieurs parties ayant un modèle syntaxique correspondant à une séquence souhaitée d'étiquettes PoS définies par des règles syntaxiques ;
   la sélection (204) d'un sous-ensemble desdites parties sur la base d'au moins l'un des éléments suivants :

   (i) un contenu de ladite sortie textuelle associé à chacune desdites parties,
   (ii) une durée de chacune desdites parties, et
   (iii) un score de confiance attribué par ledit algorithme de reconnaissance vocale entraîné à ladite sortie textuelle obtenue associée à ladite partie ;

   dans lequel ladite sélection (204) comprend l'exclusion, du sous-ensemble, de parties dont une sortie textuelle correspondante comprend des informations privées ;
   la réception, en entrée, de transcriptions manuelles (208) desdites parties sélectionnées ;
   la génération d'un ensemble de réentraînement comprenant :

   (i) lesdites parties dans ledit sous-ensemble, et
   (ii) lesdites transcriptions correspondant auxdites parties dans ledit sous-ensemble ; et

   le ré-entraînement (212) dudit algorithme de reconnaissance vocale entraîné sur ledit ensemble de ré-entraînement.

2. Procédé selon la revendication 1, dans lequel l'extraction d'une ou de plusieurs parties ayant ledit modèle syntaxique comprend :

   l'identification d'une séquence d'étiquettes PoS qui correspond à une séquence de mots souhaitée selon une règle syntaxique ;
   l'utilisation d'une règle syntaxique pour identifier le début et la fin de la partie ; et
   l'extraction de la partie selon la règle syntaxique.

3. Procédé selon la revendication 1, dans lequel ledit réentraînement optimise un paramètre de précision associé à ladite sortie textuelle dudit algorithme de reconnaissance vocale entraîné.

4. Procédé selon la revendication 1, dans lequel ledit algorithme de reconnaissance vocale réentraîné est appliqué à un ou plusieurs fichiers audio cibles, pour obtenir une sortie textuelle correspondant à chacun desdits fichiers audio cibles.

5. Procédé selon la revendication 4, dans lequel ledit réentraînement est exécuté au moins en réponse à des écarts dans une distribution attendue de caractéristiques dans lesdits fichiers audio cibles.

6. Procédé selon la revendication 1, dans lequel ladite sélection sur la base dudit contenu comprend le rejet desdites parties dont une sortie textuelle correspondante comprend au moins l'un des éléments suivants : une chaîne numérique ; une sortie textuelle qui correspond à une entrée dans une base de données connue ; et une sortie textuelle qui correspond, au moins en partie, à la sortie textuelle correspondant à une autre partie dans ledit sous-ensemble.

7. Procédé selon la revendication 1, dans lequel ladite durée est comprise entre 4 et 6 secondes.

8. Procédé selon la revendication 1, dans lequel ledit score de confiance est compris entre 0,7 et 0,9.

9. Programme informatique, comprenant des instructions qui, lorsque le programme est exécuté par un processeur, amènent le processeur à mettre en œuvre le procédé selon une quelconque revendication précédente.

10. Système (100) comprenant :

au moins un processeur matériel ; et

un support de stockage non transitoire lisible par ordinateur sur lequel sont stockées des instructions de programme, les instructions de programme étant exécutables par l'au moins un processeur matériel pour :

recevoir, en entrée, un ou plusieurs fichiers audio ;

appliquer un algorithme de reconnaissance vocale entraîné (101) auxdits un ou plusieurs fichiers audio, pour obtenir une sortie textuelle correspondant à chacun desdits un ou plusieurs fichiers audio ;

utiliser un étiqueteur de partie de discours, PoS, pour attribuer des étiquettes PoS à chaque mot de la sortie textuelle ;

extraire, à partir de chacun desdits un ou plusieurs fichiers audio, une ou plusieurs parties ayant un modèle syntaxique correspondant à une séquence souhaitée d'étiquettes PoS définies par des règles syntaxiques ;

sélectionner un sous-ensemble desdites parties sur la base d'au moins l'un des éléments suivants :

(i) un contenu de ladite sortie textuelle associé à chacune desdites parties,

(ii) une durée de chacune desdites parties, et

(iii) un score de confiance attribué par ledit algorithme de reconnaissance vocale entraîné à ladite sortie textuelle obtenue associée à ladite partie ;

pendant l'exclusion, du sous-ensemble, de parties dont une sortie textuelle correspondante comprend des informations privées ;

recevoir, en entrée, des transcriptions manuelles de chacune desdites parties ;

générer un ensemble de réentraînement comprenant :

(i) lesdites parties dans ledit sous-ensemble, et

(ii) lesdites transcriptions correspondant auxdites parties dans ledit sous-ensemble ; et

ré-entraîner ledit algorithme de reconnaissance vocale entraîné sur ledit ensemble de ré-entraînement.

11. Système selon la revendication 10, dans lequel ledit réentraînement optimise un paramètre de précision associé à ladite sortie textuelle dudit algorithme de reconnaissance vocale entraîné.

12. Système selon la revendication 10, dans lequel ledit algorithme de reconnaissance vocale réentraîné est appliqué à un ou plusieurs fichiers audio cibles, pour obtenir une sortie textuelle correspondant à chacun desdits fichiers audio cibles.

13. Système selon la revendication 12, dans lequel ledit réentraînement est exécuté au moins en réponse à des écarts dans une distribution attendue de caractéristiques dans lesdits fichiers audio cibles.

14. Système selon la revendication 10, dans lequel ladite sélection sur la base dudit contenu comprend le rejet desdites parties dont une sortie textuelle correspondante comprend au moins l'un des éléments suivants : une chaîne numérique (112) ; une sortie textuelle qui correspond à une entrée dans une base de données connue ; et une sortie textuelle qui correspond, au moins en partie, à la sortie textuelle correspondant à une autre partie dans ledit sous-ensemble.

FIG. 1

EP 3 813 059 B1

EP 3 813 059 B1

RECEIVING AUDIO FILES, AND PROVIDING TRANSCRIPTION — 200

↓

IDENTIFYING SYNTACTIC PATTERNS IN THE TRANSCRIPTIONS AND EXTRACTING FRAGMENTS — 202

↓

LABELING AND SCORING THE FRAGMENTS, COMPARING RECOGNIZED CONTENT OF THE FRAGMENTS AND SELECTING FRAGMENTS ACCORDING SCORE AND DIVERSITY OF THE CONTENT — 204

↓

SELECTING ONE FRAGMENT PER EACH AUDIO FILE — 206

↓

MANUAL TRANSCRIPTION — 208

↓

PRIVATE INFORMATION POST FILTERING — 210

↓

MODEL TRAINING — 212

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10388272 B1, Thomson

- US 2014278425 A1, Jost